# EUROPEAN PATENT APPLICATION

(11) **EP 4 246 792 A1**
(43) Date of publication of application: **20.09.2023**
(21) Application number: 20963155.5
(22) Date of filing: 03.12.2020
(51) Int. Cl.: H02M 3/158

(54) **BIDIRECTIONAL DC/DC CONVERTER, URBAN RAIL VEHICLE AND TRACTION SYSTEM THEREOF**

(30) Priority: 27.11.2020 CN 202011364325
(71) Applicant: Zhuzhou CRRC Times Electric Co., Ltd., Zhuzhou, Hunan 412001 (CN)
(72) Inventor: FU, Xiaolong, Zhuzhou, Hunan 412001 (CN); WAN, Weiwei, Zhuzhou, Hunan 412001 (CN); JIAO, Bi, Zhuzhou, Hunan 412001 (CN); LIN, Zhenjun, Zhuzhou, Hunan 412001 (CN); CHEN, Wenguang, Zhuzhou, Hunan 412001 (CN); ZHAO, Qingliang, Zhuzhou, Hunan 412001 (CN); HE, Hongcheng, Zhuzhou, Hunan 412001 (CN); CHEN, Yuqi, Zhuzhou, Hunan 412001 (CN); XIAO, Weihua, Zhuzhou, Hunan 412001 (CN); YAO, Wujun, Zhuzhou, Hunan 412001 (CN); ZENG, Xiaoqin, Zhuzhou, Hunan 412001 (CN)
(74) Representative: Behr, Wolfgang
(86) International application number: PCT/CN2020/133547
(87) International publication number: WO 2022/110267

(57) **Abstract**

A bidirectional DC/DC converter, an urban rail vehicle and a traction system thereof. The bidirectional DC/DC converter comprises a DC/DC module, a control module, a chopping inductance module and a bypass contactor. By means of the control module and according to the output voltage of a power supply module, the DC/DC module is selected to work or the bypass contactor is closed to complete electric energy transmission, and there is no need to re-design an original traction system, thereby saving on costs; at the same time, the DC/DC module uses multiple multi-phase staggered parallel circuit structures, such that the output power of the bidirectional DC/DC converter is improved, the buck-boost range is large, and the requirements of the traction system of the urban rail vehicle can be met; in addition, multiple phases share one control module, so that the size of the bidirectional DC/DC converter is further reduced, and the costs are saved on.

## Description

This application claims the priority to Chinese Patent Application No. 202011364325.X, titled "BIDIRECTIONAL DC/DC CONVERTER, URBAN RAIL VEHICLE AND TRACTION SYSTEM THEREOF", filed on November 27, 2020 with the China National Intellectual Property Administration, which is incorporated herein by reference in its entirety.

### FIELD

The present disclosure relates to the field of rail transit, and in particular to a bidirectional DC-DC converter, a rail vehicle, and a traction system for the rail vehicle.

### BACKGROUND

As a core for adjusting and managing power flow among a power storage, a power supply and a load, a bidirectional DC-DC converter controls a direction of the power flow so as to realize storing and release of electric power, and thus plays an important role in a power management system for a rail vehicle. At present, the rail vehicle operates under a DC1500V system, and cannot directly operate with a circuit supplied by a DC3000V power grid. There are two methods to enable the rail vehicle to operate with the circuit supplied by the DC3000V power grid. A first method is to re-design the traction system based on a requirement of the circuit supplied by the DC3000V power grid, which causes a high cost. A second method is to provide a bidirectional DC-DC converter for assistance. Conventionally, a single topology is adopted for the bidirectional DC-DC converter, so that the bidirectional DC-DC converter has a small range of increasing or reducing a voltage, which cannot meet a requirement of the traction system for the rail vehicle.

Therefore, it is necessary for those skilled in the art to provide a solution to solve the above technical problem.

### SUMMARY

An objective of the present disclosure is to provide a bidirectional DC-DC converter, a rail vehicle, and a traction system for the rail vehicle. With the bidirectional DC-DC converter, no redesign is required for an original traction system. The bidirectional DC-DC converter has a large range of increasing or reducing a voltage, can satisfy a requirement of the traction system of the rail vehicle is satisfied, and has a small volume and low cost.

To solve the above technical problem, a bidirectional DC-DC converter is provided according to the present disclosure. The bidirectional DC-DC converter includes a DC-DC module, a control module, a chopping inductor module, and a bypass contactor.

The DC-DC module includes n upper bridge arms and n lower bridge arms that are connected in a one-to-one correspondence. Each of the upper bridge arms includes m switching transistor modules connected in parallel, and each of the lower bridge arms includes m switching transistor modules connected in parallel. Each of the switching transistor modules includes a silicon-controlled element and a diode that is connected in reverse parallel with the silicon-controlled element. The DC-DC module further includes an input capacitor, where a first terminal of the input capacitor is connected to a first terminal of each of the upper bridge arms, and a second terminal of the input capacitor is connected to a second terminal of each of the lower bridge arms. An input terminal of the DC-DC module is connected to a power supply module, an output terminal of the DC-DC module is connected to the chopping inductor module. The chopping inductor module is connected to a traction inverter. A first terminal of the bypass contactor is connected to the power supply module, and a second terminal of the bypass contactor is connected to the traction inverter. The number n represents an integer greater than or equal to 2, and m represents a positive integer.

The control module is configured to detect an output voltage of the power supply module, and control, based on the output voltage, the DC-DC module or turn-on of the bypass contactor.

In an embodiment, the power supply module is a DC1500V power grid, a DC3000V power grid, or a regenerative braking energy feedback module.

In an embodiment, the control module is further configured to: obtain an operation parameter of the bidirectional DC-DC converter; determine whether the operation parameter meets a protection condition; and perform a protection corresponding to the protection condition, in a case that the operation parameter meets the protection condition, where the protection condition is a condition for one of an overvoltage protection, an under-voltage protection, or an overcurrent protection.

In an embodiment, the chopping inductor module includes n chopping inductors.

In an embodiment, the DC-DC converter further includes an output contactor disposed between the chopping inductor module and the traction inverter, and the control module is further configured to control to turn on the output contactor in a case that the output voltage of the DC-DC module becomes up to a predetermined voltage.

In an embodiment, the DC-DC converter further includes: an input filter reactor, disposed between the power supply module and the DC-DC module.

In an embodiment, the DC-DC converter further includes: an output capacitor, disposed between the chopping inductor module and the traction inverter.

In an embodiment, the DC-DC converter further includes: a charging and shorting module, disposed between the power supply module and the DC-DC module. The charging and shorting module includes a charging contactor, a shorting contactor, a charging resistor and the input capacitor, where a first terminal of the shorting contactor is connected to the power supply module and a first terminal of the charging contactor, a second terminal of the shorting contactor is connected to the input capacitor, and a second terminal of the charging contactor is connected to a second terminal of the shorting contactor through the charging resistor.

In an embodiment, the DC-DC converter further includes: a heat dissipation fan, configured to dissipate heat for the bidirectional DC-DC converter.

In an embodiment, a process of controlling operation of the DC-DC module based on the output voltage includes: controlling the DC-DC module to operate in a buck mode by using a phase-shift control signal corresponding to a traction condition, in a case that an operating condition at present is the traction condition and the output voltage meets a starting condition corresponding to the traction condition; and controlling the DC-DC module to operate in a boost mode by using a phase-shift control signal corresponding to a regenerative braking condition, in a case that the operating condition at present is the regenerative braking condition and the output voltage meets a starting condition corresponding to the regenerative braking condition.

In an embodiment, the DC-DC converter further includes a cabinet. The DC-DC module, a cooling module, and an input filter reactor are disposed on a left side within the cabinet, and arranged in the above-listed sequence from front to back. The chopping inductor module is disposed on right of the cooling module. The cooling module is configured to cool the DC-DC module, the input filter reactor, and the chopping inductor module. A low-voltage cavity is defined on right of the DC-DC module, where the control module, a sensor for a power grid voltage, a sensor for an intermediate voltage, a sensor for an output voltage, and a sensor for an output current are disposed within the low-voltage cavity. A high-voltage cavity is defined on right of the input filter reactor, where a charging and discharging module, the bypass contactor, an output contactor, a sensor for an input current, and an input wiring busbar are disposed within the high-voltage cavity.

In an embodiment, the cooling module includes a heat dissipation fan and a fan contactor. The cabinet is provided with an inlet air filter on top of or in front of the DC-DC module, and the cabinet is provided with an inlet air filter above the input filter reactor.

In an embodiment, an interior of the cabinet is partitioned, by separators, into left mounting cavities and right mounting cavities. The left mounting cavities include three cavities arranged on the left from front to back, and the three cavities are provided with the DC-DC module, the cooling module, and the input filter reactor, respectively. The right mounting cavities include, from front to back, the high-voltage cavity, a middle cavity accommodating the chopping inductor module, and the low-voltage cavity.

To solve the above technical problem, a traction system for a rail vehicle is further provided in the present disclosure. the traction system includes a DC3000V lightning arrester, a DC1500V lightning arrester, a switch for selecting a lightning arrester, a high-voltage electrical box, a direct-current high-speed circuit breaker, a wire reactor, a traction inverter, a traction motor, a braking resistor and the bidirectional DC-DC converter according to any one of the above embodiments.

To solve the above technical problem, a rail vehicle is further provided in the present disclosure. The rail vehicle includes the traction system for a rail vehicle as described above.

A bidirectional DC-DC converter is provided according to the present disclosure, including a DC-DC module, a control module, a chopping inductor module, and a bypass contactor. The control module is configured to control, based on an output voltage of a power supply module, the DC-DC module or turn-on of the bypass contactor, so as to realize a power transfer. In a case that the output voltage is DC3000V, the DC-DC module is controlled to operate, so that the voltage DC3000V is reduced to a voltage DC1500V, and the voltage DC1500V is outputted to a back-end device. In a case that the output voltage is DC1500V, the bypass contactor is turned on, so that the output voltage of the power supply module is transmitted directly to the back-end device. Therefore, it is not necessary to redesign an original traction system, and cost is saved. In addition, the DC-DC module is of a circuit structure having multiple cascades, multiple phases, and interleaved parallel connections. Therefore, the bidirectional DC-DC converter has an improved output power, and a large range for increasing or decreasing a voltage, thereby satisfying a requirement of the traction system for the rail vehicle. Furthermore, the control module is shared by multiple phases, so that the volume of the bidirectional DC-DC converter is further reduced and the cost is saved. A rail vehicle and a traction system for the rail vehicle are further provided according to the present disclosure, which have the same beneficial effects as the bidirectional DC-DC converter as described above.

### BRIEF DESCRIPTION OF THE DRAWINGS

In order to illustrate embodiments of the present disclosure more clearly, drawings to be used in the embodiments are introduced simply hereinafter. It is apparent that the drawings described below show only some embodiments of the present disclosure. For those skilled in the art, other drawings may be obtained based on the provided drawings without any creative effort.
Figure 1 is a schematic structural diagram showing a bidirectional DC-DC converter according to an embodiment of the present disclosure;
Figure 2 is a schematic diagram showing an equivalent circuit of a DC-DC module in a case that a bidirectional DC-DC converter operates in a forward buck mode according to an embodiment of the present disclosure;
Figure 3 is a schematic diagram showing an equivalent circuit of a DC-DC module in a case that a bidirectional DC-DC converter operates in a backward boost mode according to an embodiment of the present disclosure;
Figure 4 is a schematic structural diagram showing a bidirectional DC-DC converter according to another embodiment of the present disclosure;
Figure 5 is a schematic structural diagram showing a bidirectional DC-DC converter according to another embodiment of the present disclosure;
Figure 6 is a schematic structural diagram showing a bidirectional DC-DC converter according to another embodiment of the present disclosure; and
Figure 7 is a schematic structural diagram showing a traction system for a rail vehicle according to an embodiment of the present disclosure.

### DETAILED DESCRIPTION OF EMBODIMENTS

A bidirectional DC-DC converter, a rail vehicle, and a traction system for the rail vehicle are provided in the present disclosure. With the bidirectional DC-DC converter, no redesign is required for an original traction system, a large range for increasing or decreasing a voltage is realized, a requirement of the traction system for the rail vehicle can be satisfied, and the bidirectional DC-DC converter has a small volume and low cost.

In order to make objectives, technical solutions and advantages of embodiments of the present disclosure clearer, the technical solutions in the embodiments the present disclosure are described clearly and completely with reference to the drawings in the embodiments of the present disclosure hereinafter. It is apparent that the embodiments described herein are only some, rather than all of, embodiments of the present disclosure. Based on the embodiments of the present disclosure, all other embodiments obtained by those skilled in the art without any creative effort should fall within the protection scope of the present disclosure.

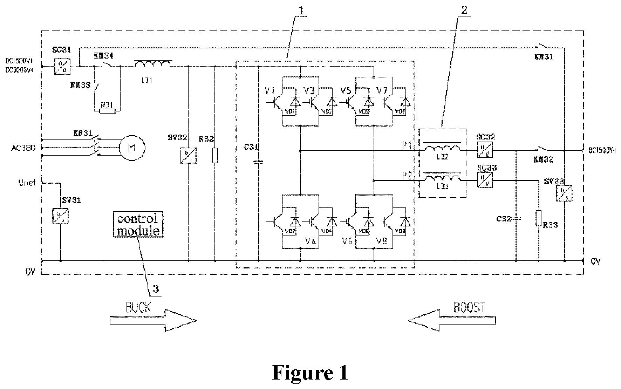

Reference is made to Figure 1, which is a schematic structural diagram showing a bidirectional DC-DC converter according to an embodiment of the present disclosure. The bidirectional DC-DC converter includes a DC-DC module 1, a control module 3, a chopping inductor module 2, and a bypass contactor KM31.

The DC-DC module 1 includes n upper bridge arms and n lower bridge arms that are connected in a one-to-one correspondence. Each of the upper bridge arms includes m switching transistor modules connected in parallel. Each of the lower bridge arms includes m switching transistor modules connected in parallel. Each of the switching transistor modules includes a silicon-controlled element V and a diode D that is connected in reverse parallel with the silicon-controlled element. The DC-DC module 1 further includes an input capacitor C31. A first terminal of the input capacitor C31 is connected to a first terminal of each of the upper bridge arms. A second terminal of the input capacitor C31 is connected to a second terminal of each of the lower bridge arms. An input terminal of the DC-DC module is connected to a power supply module, and an output terminal of the DC-DC module 1 is connected to the chopping inductor module 2. The chopping inductor module 2 is connected to a traction inverter. A first terminal of the bypass contactor KM31 is connected to the power supply module, and a second terminal of the bypass contactor KM31 is connected to the traction inverter. In the description, n represents an integer greater than or equal to 2, and m represents a positive integer.

The control module 3 is configured to detect an output voltage of the power supply module, and control, based on the output voltage, the DC-DC module 1 or turn-on of the bypass contactor KM31.

The chopping inductor module 2 includes n chopping inductors. The DC-DC converter further includes an input filter reactor L31 and an output capacitor C32. The input filter reactor L31 is disposed between the power supply module and the DC-DC module 1. The output capacitor C32 is disposed between the chopping inductor module 2 and the traction inverter.

In an embodiment, the DC-DC module 1 serves as a core component in the bidirectional DC-DC converter. The DC-DC module 1 includes n upper bridge arms and n lower bridge arms that are connected in a one-to-one correspondence. Each of the upper bridge arms and each of the lower bridge arms each include m switching transistor modules that are connected in parallel with each other. Each of the switching transistor modules includes a silicon-controlled element V and a diode D that is connected in inverse parallel with the silicon-controlled element. That is, the DC-DC module 1 in the present disclosure is of a circuit structure having multiple cascades, multiple phases, and interleaved parallel connections. Each phase is formed by multiple silicon-controlled elements V connected in parallel. Hence, a current capacity is improved, an output power of the bidirectional DC-DC converter is improved, and a range of increasing or reducing a voltage of the bidirectional DC-DC converter is improved, thereby the requirement of the traction system for the rail vehicle is satisfied.

Reference is made to Figure 1, which shows a structure of a DC-DC module 1 having two cascades and two phases. Such DC-DC module 1 is taken as an example for illustrating the technical solution of the present disclosure. The DC-DC module 1 may be of an interleaved parallel structure having three cascades and three phases, having four cascades and four phases, or having multiple cascades and multiple phases, which may be determined based on an actual requirement and is not limited herein. The DC-DC module 1 includes eight 750A/6500V silicon-controlled elements V each having a backward diode D. Each of the silicon-controlled elements V is represented in Figure 1 as a voltage-type IGBT. In addition to the IGBT, the silicon-controlled element V may be implemented by a MOS transistor, a triode, a high-frequency silicon carbide component, or the like. The DC-DC module 1 further includes a capacitor, a radiator, a pulse distribution board, a composite busbar, a drive board, a power supply module, a temperature relay, and other components, and the above components are not shown in Figure 1. Two silicon-controlled elements V that are connected in parallel and form a same bridge arm have almost a same key parameter, and the two silicon-controlled elements V are controlled by a same pulse signal, so as to ensure a synchronized switching and current sharing. A input terminal DC3000V+ of the DC-DC module 1 is connected to the input filter reactor L31, an output terminal P1 of the DC-DC module 1 is connected to a chopping inductor L32 in the chopping inductor module 2, and an output terminal P2 of the DC-DC module 1 is connected to a chopping inductor L33 in the chopping inductor module 2. A DC3000V power supply and a DC1500V power supply share a negative wire, and are connected to a negative wire of a main circuit of the DC-DC module 1.

A terminal of the chopping inductor L32 in the chopping inductor module 2 is connected to the output terminal P1 of the DC-DC module 1, a terminal of the chopping inductor L33 in the chopping inductor module 2 is connected to the output terminal P2 of the DC-DC module 1. Another terminal of the chopping inductor L32 and another terminal of the chopping inductor L33 are connected to the output capacitor C32. The chopper inductor L32, the chopper inductor L33, and the output capacitor C32 form an output filter for buck chopping. In a traction system for a rail vehicle, the output capacitor C32 may be eliminated; and control logic may be modified so as to connect an intermediate support capacitor in a traction inverter directly as an output capacitor of the bidirectional DC-DC converter. Thereby, the cost is effectively reduced, space is saved, and a weight is reduced.

In a preferred embodiment, a process of controlling operation of the DC-DC module 1 based on the output voltage is as follows.

In a case that an operating condition at present is a traction condition and the output voltage meets a starting condition corresponding to the traction condition, the DC-DC module 1 is controlled to operate in a buck mode in response to a phase-shift control signal corresponding to the traction condition.

In a case that the operating condition at present is a regenerative braking condition and the output voltage meets a starting condition corresponding to the regenerative braking condition, the DC-DC module 1 is controlled to operate in a boost mode in response to a phase-shift control signal corresponding to the regenerative braking condition.

It can be understood that a bidirectional DC-DC conversion having a high voltage and high power is achieved in the present disclosure. The power supply module may supply a voltage of DC3000V or DC1500V. In an example, the power supply module may be a DC1500V power grid, a DC3000V power grid, or a regenerative braking energy feedback module. The regenerative braking energy feedback module supplies power to the DC-DC module 1 when the DC-DC module operates in the boost mode.

In a case that the operating condition at present is the traction condition, and the power supply module is the DC3000V power grid, that is, the output voltage of the power supply module is DC3000V, it is determined that the starting condition corresponding to the traction condition is met. In this case, the DC-DC converter is controlled to operate in the buck mode, so that the voltage DC3000V is reduced to a stable output voltage DC1500V. The voltage DC1500V is supplied to the traction inverter and an auxiliary converter. In a case that the operating condition at present is the regenerative braking condition, where the power supply module is the regenerative braking energy feedback module, and in a case that the output voltage of the power supply module is within a predetermined range (from 1650V to 1950V, for example), it is determined that the starting condition corresponding to the regenerative braking condition is met. In this case, the DC-DC converter is controlled to operate in the boost mode, power generated when a traction motor performs regenerative braking can be fed back to a direct-current side of the traction inverter, and the voltage DC1500V becomes up to the voltage DC3000V. The voltage DC3000V is fed back to the power grid. In a case that a power grid voltage is DC1500V, the input voltage DC1500V is transmitted, without any change, directly to the output terminal of the DC-DC module 1 via the bypass contactor KM31, to power the back-end traction inverter and the auxiliary converter or be fed back to the power grid.

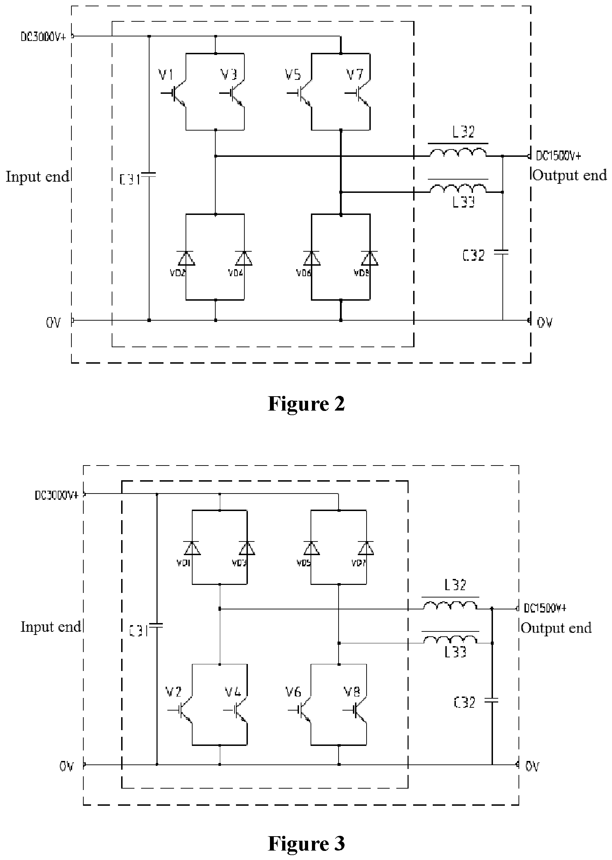

Figure 2 is a schematic diagram showing an equivalent circuit of a DC-DC module in a case that a bidirectional DC-DC converter operates in a forward buck mode. A first buck circuit is formed by a silicon-controlled element V1 and a silicon-controlled element V3 of a first upper bridge arm, a diode VD2 and a diode VD4 of a first lower bridge arm, and a chopping inductor L32 and an output capacitor C32 on a periphery of the DC-DC module 1. A second buck circuit is formed by a silicon-controlled element V5 and a silicon-controlled element V7 of a second upper bridge arm, a diode VD6 and a diode VD8 of a second lower bridge arm, and a chopping inductor L33 and an output capacitor C32 on the periphery of the DC-DC module 1. A 180° phase-shift control is performed on the first buck circuit and the second buck circuit, and an output is obtained after superimposition of the two phases.

Figure 3 is a schematic diagram showing an equivalent circuit of a DC-DC module in a case that a bidirectional DC-DC converter operates in a backward boost mode. A first boost circuit is formed by a silicon-controlled element V2 and a silicon-controlled element V4 of a first lower bridge arm, a diode VD1 and a diode VD3 of a first upper bridge arm, and a chopping inductor L32 and an output capacitor C32 on the periphery of the DC-DC module 1. A second boost circuit is formed by a silicon-controlled element V6 and a silicon-controlled element V8 of a second lower bridge arm, a diode VD5 and a diode VD7 of a second upper bridge arm, and a chopping inductor L33 and an output capacitor C32 on the periphery of the DC-DC module 1. A 180° phase-shift control is performed on the first boost circuit and the second boost circuit, and an output is obtained after superimposition of the two phases.

It can be understood that an interleaved paralleled phase-shift technology is adopted in the present disclosure, in order to realize a small ripple of the output voltage and an enhanced loading capacity. A phase-shifting angle is determined based on the number n. For example, a 180° phase-shift is applied in a case that n is 2, a 120° phase-shift is applied in a case that n is 3, a 90° phase-shift is applied in a case that n is 4, and the like.

It can be seen that in the embodiment, the control module controls, based on the output voltage of the power supply module, the DC-DC module or turn-on of the bypass contactor, so as to realize a power transfer. In a case that the output voltage is DC3000V, the DC-DC module is controlled to operate, so that the voltage DC3000V is reduced to the voltage DC1500V, and the voltage DC1500V is outputted to a back-end device. In a case that the output voltage is DC1500V, the bypass contactor is turned on, so that the output voltage of the power supply module is transmitted directly to the back-end device. Therefore, it is not necessary to redesign an original traction system, and cost is saved. In addition, the DC-DC module is of a circuit structure having multiple cascades, multiple phases, and interleaved parallel connections. Therefore, the bidirectional DC-DC converter has an improved output power, and a large range for increasing or decreasing a voltage, thereby satisfying a requirement of the traction system for the rail vehicle. Furthermore, the control module is shared by multiple phases, so that the volume of the bidirectional DC-DC converter is further reduced and the cost is saved.

On the basis of the above embodiment, a preferred embodiment is further provided. The control module 3 is further configured to: obtain an operation parameter of the bidirectional DC-DC converter; determine whether the operation parameter meets a protection condition; and perform a protection corresponding to the protection condition, in a case that the operation parameter meets the protection condition. The protection condition is a condition for one of an overvoltage protection, an under-voltage protection, or an overcurrent protection.

The control module 3 is further configured to obtain the operation parameter of the bidirectional DC-DC converter. The operation parameter includes, but is not limited to: an output voltage of the power supply module (that is, a power grid voltage), an output current of the power supply module, an intermediate voltage, an output voltage of the DC-DC module 1, an output current of the DC-DC module 1, and the like.

In the present disclosure, in order to obtain the operation parameter, a voltage sensor and a current sensor are disposed in the bidirectional DC-DC converter. Reference is made to Figure 1.

A first voltage sensor SV31 is for the power grid voltage. The first voltage sensor SV31 is configured to detect a voltage of the power grid at a front end (that is, a pantograph) of the system, and transmit a detection signal including the power grid voltage to the control module 3. On detecting that the power grid voltage is DC3000V, the control module 3 controls the DC-DC module 1 to start a buck conversion, to reduce the power grid voltage to DC 1500V, and output the DC1500V to a back-end device. On detecting that the power grid voltage is DC1500V, the control module 3 turns on the bypass contactor KM31, without starting the DC-DC module 1, so that the power grid voltage is transmitted directly to the back-end device without any change. The first voltage sensor SV31 is further configured for an overvoltage protection and under-voltage protection on the power grid voltage. In a case that the power grid voltage meets the condition for an overvoltage protection or the condition for an under-voltage protection, a protection corresponding to the condition is performed, so as to ensure safety of the bidirectional DC-DC converter.

A second voltage sensor SV32 is for the intermediate voltage. The second voltage sensor SV32 is configured to detect an intermediate voltage of the bidirectional DC-DC converter, that is, a voltage across two terminals of the input capacitor C31. The second voltage sensor SV32 is further configured for an overvoltage protection and under-voltage protection on the intermediate voltage. In a case that the intermediate voltage meets the condition on an overvoltage protection or the condition for an under-voltage protection, a protection corresponding to the condition is performed, so as to ensure the safety of the bidirectional DC-DC converter.

A third voltage sensor SV33 is for the output voltage. The third voltage sensor SV33 is configured to detect an output voltage of the DC-DC module 1, and transmit a detection signal including the output voltage to the control module 3 for a closed-loop control.

A first current sensor SC31 is for a positive input current. The first current sensor SC31 is configured for an overcurrent protection on an input current. In a case that the input current meets the condition for an overcurrent protection, a protection corresponding to the condition for an overcurrent protection is performed, so as to ensure the safety of the bidirectional DC-DC converter.

A second current sensor SC32 and a third current sensor SC33 are for an output current, and are configured for overcurrent protection on the output current. The second current sensor SC32 is connected in series at a rear end of the chopping inductor L32, and the third current sensor SC33 is connected in series at a rear end of the chopping inductor L33. In a case that the output current meets the condition for an overcurrent protection, a protection corresponding to the condition for an overcurrent protection is performed, so as to ensure the safety of the bidirectional DC-DC converter.

The voltage sensor and the current sensor in the present disclosure are based on a magnetic balance principle of an active sensor, or may be another passive voltage transformer or passive current transformer, or a sensor based on a direct amplification principle.

In a preferred embodiment, the DC-DC converter further includes an output contactor KM32 disposed between the chopping inductor module 2 and the traction inverter. The control module 3 is further configured to control to turn on the output contactor KM32, in a case that the output voltage of the DC-DC module 1 becomes up to a preset voltage.

A terminal of the output contactor KM32 is connected to the chopping inductor, and another terminal of the output contactor KM32 is connected to a back-end load or the traction inverter. The output contactor KM32 is mainly for connecting to output and isolation. In a case that the control module 3 controls the DC-DC module 1 to start operation, and the third voltage sensor SV33 detects that the output voltage of the DC-DC module 1 is increased linearly from zero to the preset voltage, the DC-DC module 1 controls to turn on the output contactor KM32, so that the voltage is outputted to the back-end load or the traction inverter. Hence, the safety of the bidirectional DC-DC converter is improved.

In a preferred embodiment, the DC-DC converter further includes a charging and shorting module. The charging and shorting module is disposed between the power supply module and the DC-DC module 1. The charging and shorting module includes a charging contactor KM33, a shorting contactor KM34, a charging resistor R31, and the input capacitor C31.

A first terminal of the shorting contactor KM34 is connected to the power supply module and a first terminal of the charging contactor KM33. A second terminal of the shorting contactor KM34 is connected to the input capacitor C31. A second terminal of the charging contactor KM33 is connected to a second terminal of the shorting contactor KM34 through the charging resistor R31.

The charging and shorting module includes the charging contactor KM33, the shorting contactor KM34, the charging resistor R31, and the input capacitor C31. The input capacitor C31 further serves as a filter capacitor for an output in boost chopping. In a case that a high voltage at the front end is detected by the control module 3, the charging contactor KM33 is turned on, and charging of the input capacitor C31 starts. In a case that a voltage of the input capacitor C31 is charged to a predetermined value (which may be set to 85% of a rated value), the control module 3 controls to turn on the shorting contactor KM34, and then keep the charging contactor KM33 turned off for a predetermined time period. Hence, the input capacitor C31 and the silicon-controlled elements in the DC-DC module 1 are prevented from an impact of a high voltage, and thereby the safety is further improved.

In a preferred embodiment, the DC-DC converter further includes a heat dissipation fan M. The heat dissipation fan M is configured to dissipate heat for the bidirectional DC-DC converter.

The heat dissipation fan M is connected to an AC380 power supply through a fan contactor KF31, and is configured to forcibly dissipate heat for the input filter reactor L31, the DC-DC module 1, the chopping inductor L32, and the chopping inductor L33 in the bidirectional converter. Therefore, it is ensured that the system has normal heat dissipation and operates stably.

Further, the DC-DC converter further includes a discharge resistor R32 and a discharge resistor R33.

In a preferred embodiment, the DC-DC converter further includes a cabinet. The DC-DC module 1, a cooling module, and the input filter reactor L31 are disposed on a left side within the cabinet, and arranged in the above-listed sequence from front to back. The chopping inductor module 2 is disposed on right of the cooling module. The cooling module is configured to cool the DC-DC module 1, the input filter reactor L31, and the chopping inductor module 2. A low-voltage cavity is defined on right of the DC-DC module 1. The control module 3, the sensor for a power grid voltage, the sensor for an intermediate voltage, the sensor for an output voltage, and the sensor for an output current are disposed within the low-voltage cavity. A high-voltage cavity is defined on right of the input filter reactor L31. A charging and discharging module, the bypass contactor KM31, the output contactor KM32, a sensor for an input current, and an input wiring busbar are disposed within the high-voltage cavity.

In a preferred embodiment, the cooling module includes a heat dissipation fan M and a fan contactor KF31. The cabinet is provided with an inlet air filter on top of or in front of the DC-DC module 1. The cabinet is provided with an inlet air filter above the input filter reactor L31.

In a preferred embodiment, an interior of the cabinet is partitioned, by separators, into left mounting cavities and right mounting cavities. The left mounting cavities include three cavities arranged on the left from front to back, and the three cavities are provided with the DC-DC module 1, the cooling module, and the input filter reactor L31, respectively. The right mounting cavities include, from front to back, the high-voltage cavity, a middle cavity provided with the chopping inductor module 2, and the low-voltage cavity.

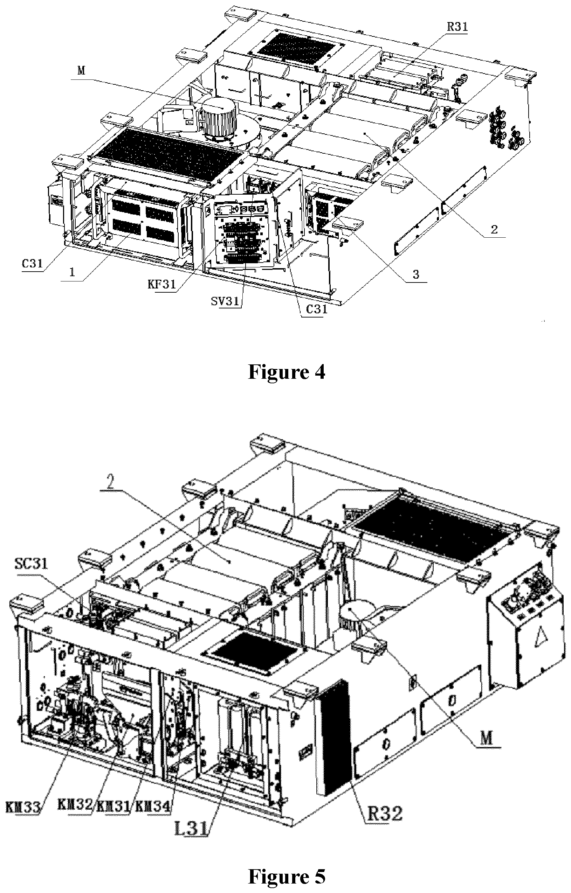

As shown in Figure 4 to Figure 6, the cooling device is implemented as a fan. Apparently, the cooling device may be a water cooling device, which is not limited in the present disclosure. The DC-DC module 1 may be disposed on a back plane of a cavity corresponding to the DC-DC module 1. The input filter reactor L31 is disposed on another side in the cabinet opposite to the DC-DC module 1. The heat dissipation fan M is disposed between the DC-DC module 1 and the input filter reactor L31, and is mounted on a mounting beam of a panel on a left side. The heat dissipation fan M absorbs air to cool the DC-DC module 1 and the input filter reactor L31. Air filters are disposed on top portions of the cabinet above the cavities accommodating the DC-DC module 1 and the input filter reactor L31, respectively. The chopping inductor module 2 is mounted on and supported by two main bearing beams expanding through the middle of the cabinet, and the chopping inductor module 2 is structurally connected in series with the heat dissipation fan M. The heat dissipation fan M blows air to cool the chopping inductor module 2. An air outlet is disposed on a bottom portion of the cabinet under the chopping inductor module 2. The high-voltage cavity is mainly provided with a charging and shorting unit, the bypass contactor KM31, the output contactor KM32, the sensor for an input current, the input wiring busbar, other structural wirings, and the like. The charging and shorting unit mainly includes the charging contactor KM33, the shorting contactor KM34, and the charging resistor R31. The control module 3 is mounted on a back plane of the low-voltage cavity on right of a DDM module, and is stacked with a plane of the power supply. A left portion in the low-voltage cavity is for a control contactor unit. The control contactor unit includes a contactor for controlling the fan, a relay for the shorting contactor KM34, a relay for the bypass contactor KM31, a filter for a power supply, a circular connector for branch circuits, and the like. The first voltage sensor SV31, the second voltage sensor SV32, the third voltage sensor SV33, and the current sensor are arranged behind the control contactor unit within the low-voltage cavity.

In the present disclosure, the chopping inductor and the output capacitor C32 are not included in the DC-DC module 1, and are mounted on the periphery of the DC-DC module 1 within the cabinet. Other embodiments where the chopping inductor and the output filter capacitor are integrated within the DC-DC module 1 or the DC-DC module 1 is combined in other manners are all fall within the protection scope of the present disclosure. The charging and shorting unit in the present disclosure is implemented by using a contactor, a resistor and a capacitor. Other embodiments where the charging and shorting unit is implemented by using a controlled power electronic component, a resistor and a capacitor are also possible. The cooling manner and the form of an air duct disclosed herein for the DC-DC module 1 and the input filter reactor L31 are changeable. For example, an upper air inlet may be replaced by a side air inlet, forced air cooling may be replaced by natural cooling in a case of a low power, and the forced air cooling may be replaced by water cooling in a case of a high power.

For the cabinet of the bidirectional DC-DC converter according to the present disclosure, a position, quantity and manner of incoming and outgoing wires may be implemented in other manners. Structural parts such as a frame structure of the cabinet, a structure of a cover plate of a door of the cabinet, and a sealing manner are not limited, and may be implemented in other manners. Especially, arrangements of main components in the present disclosure, such as the DC-DC module 1, the heat dissipation fan M, the chopping inductors, the input filter reactor L31, the control module 3, and the like, may be adjusted. Such modifications based on the present disclosure should be considered as alternative arrangements of the structure disclosed in the present disclosure.

In summary, the present disclosure solves the problem in the conventional technology that a single bidirectional DC-DC converter or a parallel connection of single bidirectional DC-DC converters has a low output power, high cost and large volume, and is not applicable to a scenario of high power. In the present disclosure, the interleaved parallel structure is adopted, so that the output power of the bidirectional DC-DC converter is improved, and the control module is shared by multiple phases. Therefore, the bidirectional DC-DC converter has a small volume and low cost. On the basis of the interleaved parallel structure, phase-shift is applied on the drive pulse for the phases, so that a small ripple of the output voltage and a rapid dynamic response are realized, thereby ensuring a normal operation of the rail vehicle under a hybrid power supply of DC1500V and DC3000V.

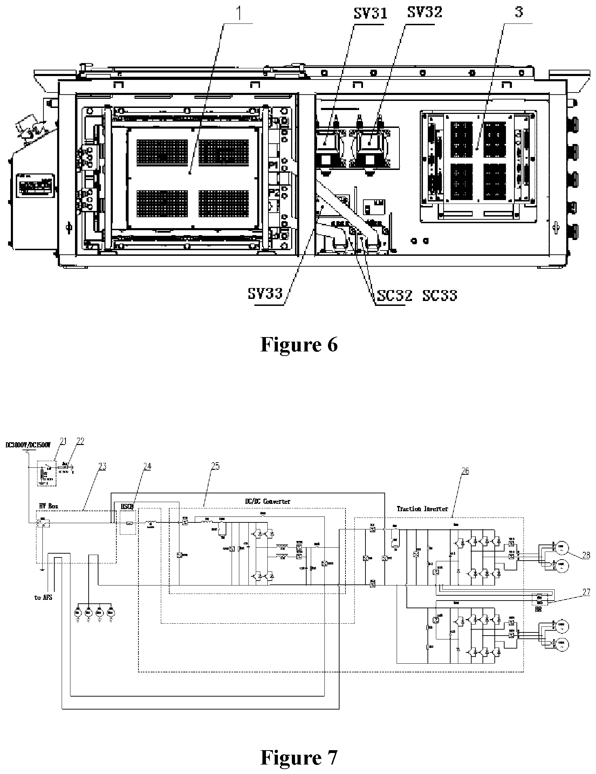

Reference is made to Figure 7, which is a schematic structural diagram showing a traction system for a rail vehicle according to an embodiment of the present disclosure. The traction system includes a DC3000V lightning arrester 21, a DC1500V lightning arrester 22, a switch KM2 for selecting a lightning arrester, a high-voltage electrical box 23, a direct-current high-speed circuit breaker 24, a wire reactor L1, a traction inverter 26, a traction motor 27, a braking resistor 28, and the bidirectional DC-DC converter 25 according to any one of the embodiments as described above.

Reference is made to Figure 7, which shows a circuit diagram where a bidirectional DC-DC converter according to an embodiment of the present disclosure is applied in a traction system for a rail vehicle under a double-current power supply (DC3000V/DC1500V). The DC3000V arrester 21 and the DC1500V arrester 22 are disposed close to a pantograph. The DC3000V arrester 21 is connected to the pantograph, and a contactor is disposed at a front end of the DC1500V arrester 22. In a case that the vehicle travels under a voltage of DC1500V, the vehicle controls to turn on the contactor to connect the DC1500V arrester 22 to the circuit. In a case that the vehicle travels under a voltage of DC3000V, the vehicle controls to turn off the contactor to disconnect the DC1500V arrester 22 from the circuit. A rear end of the pantograph is connected to the high-voltage electrical box 23. A rear end of the high-voltage electrical box 23 is connected to the direct-current high-speed circuit breaker 24. A rear end of the high-speed circuit breaker 24 is connected to the wire reactor L1 in the traction inverter 26. A rear end of the wire reactor L1 is connected to the bidirectional DC-DC converter 25 provided in the present disclosure. A rear end of the bidirectional DC-DC converter 25 is connected to the traction inverter 26. A rear end of the traction inverter is connected to the braking resistor 27 and the traction motor 28. Whether the DC-DC module in the DC-DC converter 25 operates depends on a circuit voltage, and is controlled by the control module. Whether the bidirectional DC-DC converter 25 operates in the buck mode or the boost mode depends on whether the traction inverter 26 in the traction system operates in a traction condition or a regenerative braking condition. Control systems for the bidirectional DC-DC converter 25, the traction inverter 26, and the rail vehicle coordinate closely with each other to complete relevant logic control.

In addition, a rail vehicle is further provided according to an embodiment of the present disclosure. The rail vehicle includes the traction system for a rail vehicle as described above.

Reference may be made to the above for introduction of the rail vehicle in the present disclosure, which is not repeated here.

The rail vehicle according to the present disclosure has the same beneficial effects as the bidirectional DC-DC converter as described above.

It should be further noted that the relationship terminologies such as first, second or the like in the specification are only used to distinguish one entity or operation from another entity or operation, rather than to necessitate or imply an actual relationship or order of these entities or operations. Furthermore, terms "include", "comprise" or any variants thereof are intended to be non-exclusive. Therefore, a process, method, article or device including a series of elements includes not only the mentioned elements, but also other elements that are not enumerated, or elements inherent for the process, method, article or device. Unless expressively limited otherwise, the statement "comprise (include) a(n)..." does not exclude existence of other similar elements in the process, method, article or device.

Based on the above description of the disclosed embodiments, those skilled in the art can implement or practice the present disclosure. Various modifications to the embodiments are apparent to those skilled in the art. The general principles defined in the present disclosure may be implemented in other embodiments without departing from the spirit or scope of the present disclosure. Therefore, the present disclosure is not limited to the embodiments described herein, but conforms to the widest scope consistent with the principle and novel features disclosed herein.

## Claims

1. A bidirectional DC-DC converter, comprising a DC-DC module, a control module, a chopping inductor module, and a bypass contactor, wherein
the DC-DC module comprises n upper bridge arms and n lower bridge arms that are connected in a one-to-one correspondence, wherein
each of the upper bridge arms comprises m switching transistor modules connected in parallel, and each of the lower bridge arms comprises m switching transistor modules connected in parallel,
each of the switching transistor modules comprises a silicon-controlled element and a diode that is connected in reverse parallel with the silicon-controlled element,
the DC-DC module further comprises an input capacitor, wherein
a first terminal of the input capacitor is connected to a first terminal of each of the upper bridge arms, and a second terminal of the input capacitor is connected to a second terminal of each of the lower bridge arms,
an input terminal of the DC-DC module is connected to a power supply module, and an output terminal of the DC-DC module is connected to the chopping inductor module,
the chopping inductor module is connected to a traction inverter,
a first terminal of the bypass contactor is connected to the power supply module, and a second terminal of the bypass contactor is connected to the traction inverter,
where n represents an integer greater than or equal to 2, and m represents a positive integer; and
the control module is configured to detect an output voltage of the power supply module, and control, based on the output voltage, the DC-DC module or the turn-on of the bypass contactor.

2. The bidirectional DC-DC converter according to claim 1, wherein the power supply module is a DC3000V power grid, a DC1500V power grid, or a regenerative braking energy feedback module.

3. The bidirectional DC-DC converter according to claim 1, wherein the control module is further configured to:
obtain an operation parameter of the bidirectional DC-DC converter;
determine whether the operation parameter meets a protection condition; and
perform a protection corresponding to the protection condition, in a case that the operation parameter meets the protection condition, wherein the protection condition is a condition for one of an overvoltage protection, an under-voltage protection, or an overcurrent protection.

4. The bidirectional DC-DC converter according to claim 1, wherein the chopping inductor module comprises n chopping inductors.

5. The bidirectional DC-DC converter according to claim 1, wherein
the DC-DC converter further comprises an output contactor disposed between the chopping inductor module and the traction inverter, and
the control module is further configured to control to turn on the output contactor in a case that the output voltage of the DC-DC module becomes up to a preset voltage.

6. The bidirectional DC-DC converter according to claim 1, further comprising:
an input filter reactor, disposed between the power supply module and the DC-DC module.

7. The bidirectional DC-DC converter according to claim 1, further comprising:
an output capacitor, disposed between the chopping inductor module and the traction inverter.

8. The bidirectional DC-DC converter according to claim 1, further comprising a charging and shorting module disposed between the power supply module and the DC-DC module, wherein
the charging and shorting module comprises a charging contactor, a shorting contactor, a charging resistor, and the input capacitor,
a first terminal of the shorting contactor is connected to the power supply module and a first terminal of the charging contactor,
a second terminal of the shorting contactor is connected to the input capacitor, and
a second terminal of the charging contactor is connected to a second terminal of the shorting contactor through the charging resistor.

9. The bidirectional DC-DC converter according to claim 1, further comprising:
a heat dissipation fan, configured to dissipate heat for the bidirectional DC-DC converter.

10. The bidirectional DC-DC converter according to any one of claims 2 to 9, wherein a process of controlling operation of the DC-DC module based on the output voltage comprises:
controlling the DC-DC module to operate in a buck mode by using a phase-shift control signal corresponding to a traction condition, in a case that an operating condition at present is the traction condition and the output voltage meets a starting condition corresponding to the traction condition; and
controlling the DC-DC module to operate in a boost mode by using a phase-shift control signal corresponding to a regenerative braking condition, in a case that the operating condition at present is the regenerative braking condition and the output voltage meets a starting condition corresponding to the regenerative braking condition.

11. The bidirectional DC-DC converter according to claim 10, further comprising a cabinet, wherein
the DC-DC module, a cooling module, and an input filter reactor are disposed on a left side within the cabinet, and arranged in the above-listed sequence from front to back,
the chopping inductor module is disposed on right of the cooling module,
the cooling module is configured to cool the DC-DC module, the input filter reactor, and the chopping inductor module,
a low-voltage cavity is defined on right of the DC-DC module, wherein the control module, a sensor for a power grid voltage, a sensor for an intermediate voltage, a sensor for an output voltage, and a sensor for an output current are disposed within the low-voltage cavity, and
a high-voltage cavity is defined on right of the input filter reactor, wherein a charging and discharging module, the bypass contactor, an output contactor, a sensor for an input current, and an input wiring busbar are disposed within the high-voltage cavity.

12. The bidirectional DC-DC converter according to claim 11, wherein
the cooling module comprises a heat dissipation fan and a fan contactor, and
the cabinet is provided with an inlet air filter on top of or in front of the DC-DC module, and
the cabinet is provided with an inlet air filter above the input filter reactor.

13. The bidirectional DC-DC converter according to claim 12, wherein
an interior of the cabinet is partitioned, by separators, into left mounting cavities and right mounting cavities,
the left mounting cavities comprise three cavities arranged on the left from front to back, and the three cavities are provided with the DC-DC module, the cooling module, and the input filter reactor, respectively; and
the right mounting cavities comprise, from front to back, the high-voltage cavity, a middle cavity accommodating the chopping inductor module, and the low-voltage cavity.

14. A traction system for a rail vehicle, comprising a DC3000V lightning arrester, a DC1500V lightning arrester, a switch for selecting a lightning arrester, a high-voltage electrical box, a direct-current high-speed circuit breaker, a wire reactor, a traction inverter, a traction motor, a braking resistor, and the bidirectional DC-DC converter according to any one of claims 1 to 13.

15. A rail vehicle, comprising the traction system according to claim 14.
